(19) Europäisches Patentamt
European Patent Office
Office européen des brevets

(11) **EP 2 960 744 B1**

(12) **EUROPÄISCHE PATENTSCHRIFT**

(45) Veröffentlichungstag und Bekanntmachung des Hinweises auf die Patenterteilung:
**05.04.2023 Patentblatt 2023/14**

(21) Anmeldenummer: **15172668.4**

(22) Anmeldetag: **18.06.2015**

(51) Internationale Patentklassifikation (IPC):
**G05D 7/06** *(2006.01)* **G05D 23/13** *(2006.01)*

(52) Gemeinsame Patentklassifikation (CPC):
**G05D 7/0658; G05D 23/1393**

(54) **VOLUMENSTROM- UND TEMPERATURREGELUNG EINES AUSGANGSFLUIDSTROMS**

VOLUME FLOW AND TEMPERATURE CONTROL OF AN OUTPUT FLUID FLOW

REGLAGE DE LA TEMPERATURE ET DU DEBIT D'UN FLUX DE FLUIDE DE SORTIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.06.2014 DE 102014212070**

(43) Veröffentlichungstag der Anmeldung:
**30.12.2015 Patentblatt 2015/53**

(73) Patentinhaber: **SKF Lubrication Systems Germany GmbH 69190 Walldorf (DE)**

(72) Erfinder:
• **Teupner, Martin**
**68809 Neulußheim (DE)**
• **Buergy, Armin**
**68782 Brühl (DE)**
• **Schuermann, Stefan**
**69190 Walldorf (DE)**

(74) Vertreter: **Kuhstrebe, Jochen SKF GmbH Gunnar-Wester-Straße 12 97421 Schweinfurt (DE)**

(56) Entgegenhaltungen:
**DE-A1- 3 407 796 US-A1- 2006 231 638**

**Beschreibung**

Vorliegende Erfindung betrifft ein Verfahren und ein System zum Ausgeben eines Ausgangsfluidstroms, insbesondere eines Schmierfluid, mit einem vorbestimmten Soll-Volumenstrom und einer vorbestimmten Soll-Temperatur oder Soll-Viskosität, der sich aus mindestens zwei Eingangsfluiden, jeweils mit einem einstellbaren Teilvolumenstrom und einer bestimmbaren Temperatur und/oder Viskosität, zusammensetzt.

Als Volumenstrom wird im Folgenden ein pro Zeit geflossenes Volumen eines Fluids bezeichnet. Als Teilvolumenstrom wird im Folgenden der Volumenstrom eines der Eingangsfluide bezeichnet, sodass sich der Volumenstrom des ausgehenden Fluidstroms aus den mindestens zwei Teilvolumenströmen der Eingangsfluide zusammensetzt.

Oftmals werden in mechanischen Vorrichtungen einzelne Bauteile mit demselben Schmiermittel, beispielsweise einem Schmieröl, versorgt. Ist dabei die Temperatur des Schmiermittels für die einzelnen Bauteile gleich, so ist auch die temperaturabhängige Viskosität des Schmiermittels für die einzelnen Bauteile gleich. Dies kann jedoch dazu führen, dass die Schmierung der einzelnen Bauteile nicht optimal ist, weil die Viskosität des Schmiermittels für sie entweder zu hoch oder zu niedrig ist, wodurch wiederum die Funktionalität dieser Bauteile und somit der gesamten Vorrichtung beeinträchtigt und deren Lebensdauer erheblich reduziert wird.

Um mehrere Bauteile einer mechanischen Vorrichtung mit einem Schmiermittel optimaler Temperatur und Viskosität zu versorgen, ist bekannt, die einzelnen Bauteile mit jeweils individuell hinsichtlich der Temperatur und des Volumenstroms einstellbaren Schmiermittelströmen zu versorgen. In diesem Zusammenhang ist insbesondere bei Prüfständen oder Versuchsaufbauten für Schmiermittel eine hohe Flexibilität sowohl bezüglich verfügbarer Volumenströme als auch bezüglich der Temperaturen von Schmiermitteln erforderlich. Zu diesem Zweck ist es unter anderem bekannt, die einzelnen Schmiermittelströme individuell zu heizen bzw. zu kühlen. Müssen jedoch sehr viele Bauteile einer Vorrichtung individuell mit einem Schmiermittel einer bestimmten Temperatur und eines bestimmten Volumenstroms versorgt werden, so kann das individuelle Heizen und Kühlen der einzelnen Schmiermittelströme unverhältnismäßig aufwändig werden.

Es wurde deshalb im Stand der Technik vorgeschlagen, einen benötigten Ausgangsfluidstrom mit einem vorbestimmten Volumenstrom und einer vorbestimmten Temperatur aus zwei Eingangsfluidteilströmen zu mischen, die unterschiedliche Temperaturen und jeweils einen einstellbaren Teilvolumenstrom haben. Dabei ergibt sich der Volumenstrom des Ausgangsfluidstroms aus der Summe der beiden Teilvolumenströme der Eingangsfluide, während seine Temperatur vom Mischungsverhältnis der beiden Teilvolumenströme abhängt. Für Wasser beschreibt die US2006/0231638 A1 ein Mischventil, das dazu ausgelegt ist als Eingangsfluide warmes und kaltes Wasser zu mischen, um ein Ausgangsfluid mit einstellbarere Temperatur zu erhalten. Dabei können insbesondere mehrere unterschiedliche Ausgangsfluidströme aus den gleichen Eingangsfluiden gemischt werden.

In diesem bekannten Verfahren werden aus den Sollwerten für den Volumenstrom und für die Temperatur eines Ausgangsfluidstroms die erforderlichen Soll-Teilvolumenströme der beiden Eingangsfluide berechnet. Die berechneten zwei Soll-Teilvolumenströme werden an zwei Aktuatoren weitergegeben, die sie in den entsprechenden Eingangsfluidteilstrom umsetzen.

Dabei erfolgt die Regelung für die beiden Eingangsfluidteilströme getrennt, indem der Teilvolumenstrom des jeweiligen Eingangsfluidteilstroms wird noch vor seiner Mischung mit dem anderen Eingangsfluidteilstrom gemessen und der erhaltene Ist-Teilvolumenstrom an eine jeweilige Steuereinheit weitergegeben wird, die den jeweiligen Aktuator ansteuert. Dadurch werden die Teilvolumenströme der Eingangsfluide in einem eigenen Regelkreis mittels des gemessenen Istwerts auf den Sollwert geregelt, bevor die beiden Eingangsfluidteilströme zusammengeführt werden.

Dieses bekannte Verfahren hat zum einen den Nachteil, dass stets mindestens zwei Teilvolumenstrommessungen erforderlich sind, um einen ausgehenden Fluidstrom mit einem vorbestimmten Volumenstrom und einer vorbestimmten Temperatur zu erhalten. Ferner haben die zwei unabhängigen Regelkreise für die beiden Eingangsfluidteilströme auch voneinander unabhängige Messtoleranzen, was aufgrund von Fehleraddition zu einem ungünstigen Anstieg des Toleranzintervalls beim Volumenstrom des Ausgangsfluidstroms führen kann.

Es ist daher Aufgabe der vorliegenden Erfindung, ein Verfahren und ein System zum Ausgeben eines Fluidstroms mit einem vorbestimmten Soll-Volumenstrom und einer vorbestimmten Soll-Temperatur bzw. Soll-Viskosität bereitzustellen, bei dem der notwendige Messaufwand reduziert und zugleich die Robustheit und Zuverlässigkeit des Verfahrens erhöht werden.

Diese Aufgabe wird durch ein Verfahren gemäß nebengeordneten Patentansprüchen 1, 3 und 11 und ein System gemäß Patentansprüchen 12 und 13 gelöst.

Gemäß einer ersten Variante der Erfindung wird ein Ausgangsfluidstrom mit einem vorbestimmten Soll-Volumenstrom und einer vorbestimmten Soll-Temperatur ausgegeben, der sich aus mindestens zwei Eingangsfluiden, jeweils mit einem einstellbaren Teilvolumenstrom und einer bekannten Temperatur, zusammensetzt. Dazu werden durch geeignete Messungen am Ausgangsfluidstrom erfindungsgemäß sein Ist-Volumenstrom und seine Ist-Temperatur erfasst. Stimmen diese Istwerte mit den vorbestimmten Sollwerten nicht überein, wird eine erfindungsgemäße Regelung der Teilvolumenströme der Eingangsfluide durchgeführt. Dabei kann das Verfahren bei zwei oder mehr Eingangsfluiden angewendet werden. Weiterhin bedeutet eine bekannte Temperatur, dass die Temperatur vorbekannt oder gemessen ist.

Während des Verfahrens selbst werden zu Regelung der Teilvolumenströme aus den bekannten Temperaturen der Eingangsfluide und dem Soll-Volumenstrom und der Soll-Temperatur des Ausgangsfluidstroms die einzustellenden Soll-Teilvolumenströme der Eingangsfluide berechnet. Zum anderen werden erfindungsgemäß aus den Temperaturen der Eingangsfluide, dem erfassten Ist-Volumenstrom und der erfassten Ist-Temperatur des Ausgangsfluidstroms die tatsächlich geflossenen Ist-Teilvolumenströme der Eingangsfluide berechnet. Das bedeutet, dass im Gegensatz zum Stand der Technik keine Messung der tatsächlich geflossenen Teilvolumenströme durchgeführt wird, sondern diese lediglich berechnet werden. Unter Verwendung der berechneten Istwerte werden dann die Teilvolumenströme der Eingangsfluide auf die Sollwerte geregelt.

Dabei erfolgt das Regeln mindestens eines der Teilvolumenströme, besonders bevorzugt beider Teilvolumenströme, auf den jeweiligen Soll-Teilvolumenstrom automatisiert. Dafür ist ein geschlossener elektronischer Regelkreis implementiert, wobei der jeweilige Ist-Teilvolumenstrom zu einer negativen Rückkopplung verwendet wird.

Vorteilhafterweise reicht demnach bei bekannten Temperaturen der Eingangsfluide und des Ausgangsfluidstroms eine einzige Volumenstrommessung aus, um den ausgehenden Fluidstrom auf die einzustellenden Werte zu regeln. Dies bringt eine Vereinfachung und Komponentenersparnis im Vergleich zu bekannten Verfahren, bei denen beide Teilvolumenströme der Eingangsfluide für die Regelung überwacht werden müssen. Dies ist insbesondere vorteilhaft, wenn nicht nur ein Ausgangsfluidstrom eingestellt werden soll, sondern mehrere unterschiedliche Ausgangsfluide an unterschiedliche Verbraucher ausgegeben werden sollen.

Weiterhin ermöglicht das erfindungsgemäße Verfahren eine gemeinsame Regelung der beiden Teilvolumenströme der Eingangsfluide auf der Grundlage der bekannten bzw. erfassten Temperaturen der Eingangsfluide und des Ausgangsfluidstroms, sowie dessen erfassten Ist-Volumenstroms. Dies reduziert die Fehleranfälligkeit des Volumenstroms des Ausgangsfluidstroms im Vergleich zu bekannten Verfahren, die zwei voneinander unabhängige Regelkreisen für die Teilvolumenströme verwenden.

Gemäß einem weiteren vorteilhaften Ausführungsbeispiel wird die Temperatur des Ausgangsfluidstroms und mindestens eines der Eingangsfluide, besonders bevorzugt von beiden Eingangsfluiden, mittels einer Temperaturmessung am jeweiligen Fluid erfasst. Alternativ zur Temperaturmessung kann die Temperatur auch indirekt durch Messung eines temperaturabhängigen Parameters, beispielsweise der Viskosität oder der Dichte, erfasst werden.

Gemäß einer weiteren bevorzugten Ausführungsform sind die Fluide Schmiermittel, beispielsweise Schmieröle. Insbesondere bei empfindlichen mechanischen Vorrichtungen mit beweglichen Bauteilen kann es für deren Funktion und Lebensdauer besonders wichtig sein, dass sowohl der Volumenstrom als auch die Temperatur des Schmiermittels vorbestimmten Sollwerten entsprechen.

Gemäß einer weiteren vorteilhaften Ausgestaltung wird alternativ zur Temperaturregelung der Ausgangsfluidstrom auf eine vorbestimmte Soll-Viskosität geregelt, wobei eine Ist-Viskosität des ausgehenden Fluidstroms bestimmt wird. Wie eingangs erwähnt, kann insbesondere bei Schmiermitteln anstelle der Temperatur auch der Viskositätswert des Fluidstroms für eine optimale Schmierung wichtig sein. Die Ist-Viskosität des Ausgangsfluidstroms kann beispielsweise aus seiner Ist-Temperatur berechnet oder mittels eines Viskosimeters gemessen werden.

Bei einer vorteilhaften Ausgestaltung der Erfindung ist mindestens ein, vorzugsweise beide, Teilvolumenströme der Eingangsfluide kontinuierlich einstellbar. Hierzu kann beispielsweise ein kontinuierlich einstellbares Regelventil vorgesehen sein.

Vorzugsweise erfolgt das Regeln aller Teilvolumenströme, auf den jeweiligen Soll-Teilvolumenstrom automatisiert. Alternativ kann die erfindungsgemäße Regelung zumindest eines der Teilvolumenströme zumindest teilweise durch manuelle Bedienung erfolgen.

Bei einer weiteren bevorzugten Ausführungsform des erfindungsgemäßen Verfahrens umfasst der Ausgansfluidstrom zwei Eingangsfluide mit im Wesentlichen verschiedenen Temperaturen $T_1 \neq T_2$. In diesem Fall können erfindungsgemäß die Ist-Teilvolumenströme $Q_{1\,ist}$, $Q_{2\,ist}$ und die Soll-Teilvolumenströme $Q_{1\,soll}$, $Q_{2\,soll}$ der Eingangsfluide anhand der Ist-Temperatur $T_{ist}$ und der Soll-Temperatur $T_{soll}$ sowie des Ist-Volumenstroms $Q_{ist}$ und des Soll-Volumenstroms $Q_{soll}$ des ausgehenden Fluidstroms $Q_{out}$ mittels der folgenden Formeln berechnet werden:

$$Q_{1\,ist} = Q_{ist} * (T_{ist} - T_2) / (T_1 - T_2), \qquad Q_{2\,ist} = Q_{ist} * (1 - (T_{ist} - T_2) / (T_1 - T_2))$$

bzw.

$$Q_{1\,soll} = Q_{soll} * (T_{soll} - T_2) / (T_1 - T_2), \qquad Q_{2\,soll} = Q_{soll} * (1 - (T_{soll} - T_2) / (T_1 - T_2))$$

Diese Formeln können für Ausführungsformen mit mehr als zwei Eingangsfluiden und dementsprechend mehr als zwei Teilvolumenströmen verallgemeinert werden, indem beispielsweise die hinzukommenden Teilvolumenströme als bekannte Parameter in den obigen Gleichungen berücksichtigt werden.

Alternativ zu der beschriebenen Ausführungsform kann sich der ausgehende Fluidstrom auch aus mindestens zwei Eingangsfluiden mit im Wesentlichen derselben Temperatur $T_1=T_2$ und im Wesentlichen verschiedenen Viskositätswerten $\eta_1\neq\eta_2$ zusammensetzen. Dabei ist die Temperatur $T_1=T_2$ der beiden Eingangsfluide bis auf mögliche Schwankungen oder Messtoleranzen gleich. Diese Ausführungsform kann beispielsweise bei Anwendungen günstig sein, bei denen eine Schmiermittelmischung aus unterschiedlichen Schmiermitteln erzeugt wird.

Gemäß einer zweiten Variante der Erfindung wird ein Fluidstroms mit einem vorbestimmten Soll-Volumenstrom und einer vorbestimmten Soll-Viskosität ausgegeben, der sich aus mindestens zwei Eingangsfluiden mit im Wesentlichen verschiedenen Viskositätswerten und jeweils einem einstellbaren Teilvolumenstrom zusammensetzt.

Analog zu dem oben beschriebenen Verfahren werden hier der Ist-Volumenstrom und die Ist-Viskosität des Ausgangsfluidstroms erfasst. Stimmen diese Istwerte mit den vorbestimmten Sollwerten nicht überein, wird eine Regelung der Teilvolumenströme der Eingangsfluide durchgeführt. Dazu werden zum einen aus den Viskositätswerten der Eingangsfluide und dem Soll-Volumenstrom und der Soll-Viskosität des Ausgangsfluidstroms benötigte Soll-Teilvolumenströme der Eingangsfluide berechnet, die eingestellt werden müssen. Zum anderen werden aus den Viskositätswerten der Eingangsfluide, dem erfassten Ist-Volumenstrom und der erfassten Ist-Viskosität des ausgehenden Fluidstroms tatsächlich geflossene Ist-Teilvolumenströme der Eingangsfluide berechnet. Das bedeutet, dass auch bei dieser Ausführungsform keine Messung der tatsächlich geflossenen Teilvolumenströme durchgeführt wird, sondern diese lediglich berechnet werden. Unter Verwendung der berechneten Istwerte werden dann die Teilvolumenströme der Eingangsfluide auf die Sollwerte geregelt.

Auch hier erfolgt das Regeln mindestens eines der Teilvolumenströme, besonders bevorzugt beider Teilvolumenströme, auf den jeweiligen Soll-Teilvolumenstrom automatisiert. Dafür ist ein geschlossener elektronischer Regelkreis implementiert, wobei der jeweilige Ist-Teilvolumenstrom zu einer negativen Rückkopplung verwendet wird.

Wie bereits erwähnt, kann die Ist-Viskosität des Ausgangsfluidstroms beispielsweise aus einer erfassten Ist-Temperatur des ausgehenden Fluidstroms berechnet oder mittels eines Viskosimeters gemessen werden. Das Gleiche gilt entsprechend auch für die Viskositätswerte der Eingangsfluide, wobei diese alternativ auch vorbekannt sein können.

Ein weiterer Aspekt der vorliegenden Erfindung betrifft ein System zum Ausführen der oben beschriebenen zwei Varianten des erfindungsgemäßen Verfahrens.

Dabei handelt es sich um ein System zum Ausgeben eines Fluidstroms mit einem vorbestimmten Soll-Volumenstrom und einer vorbestimmten Soll-Temperatur bzw. Soll-Viskosität, das mindestens zwei Eingangsleitungen für mindestens zwei Eingangsfluide aufweist. Die Eingangsfluide haben dabei jeweils eine bestimmbare Temperatur bzw. Viskosität und einen einstellbaren Teilvolumenstrom. Weiterhin ist mindestens ein Volumenstromregelelement, insbesondere ein Regelventil, vorgesehen, mittels dessen die Teilvolumenströme der Eingangsfluide in den Eingangsleitungen einstellbar sind. Ferner ist eine Ausgangsleitung für den Ausgangsfluidstrom vorgesehen, in die die Eingangsleitungen stromabwärts von dem mindestens einen Volumenstromregelelement münden, sodass sich der Volumenstrom des Ausgangsfluidstroms aus den mindestens zwei Teilvolumenströmen der Eingangsfluide zusammensetzt. Das System weist zudem einen Volumenstromsensor zum Erfassen des Ist-Volumenstroms des Ausgangsfluidstroms sowie eine Steuereinheit auf, die dazu ausgelegt ist, das mindestens eine Volumenstromregelelement anzusteuern und das erfindungsgemäße Verfahren auszuführen.

Erfindungsgemäß berechnet die Steuereinheit die Ist- und Soll-Teilvolumenströme der Eingangsfluide und regelt, wie oben beschrieben, die einzelnen Teilvolumenströme dementsprechend über Ansteuerung des mindestens einen Volumenstromregelelements. Erfindungsgemäß ist daher ein Volumenstromsensor am Ausgangsfluidstrom ausreichend, da die tatsächlich geflossenen Ist-Teilvolumenströme erfindungsgemäß aus dem Ist-Volumenstrom und der Ist-Temperatur bzw. der Ist-Viskosität des Ausgangsfluidstroms und den Temperaturen bzw. den Viskositätswerten der Eingangsfluide berechnet werden.

Vorzugsweise ist dabei jede Eingangsleitung mit einem eigenen Volumenstromregelelement ausgestattet, das von der Steuereinheit ansteuerbar ist. Dadurch ist in jeder Eingangsleitung der Teilvolumenstrom mittels der Steuereinheit präzise einstellbar, so dass ein größerer Sollwertbereich für den Volumenstrom des ausgehenden Fluidstroms zugänglich ist als bei Ausgestaltungen mit einer geringeren Anzahl an Volumenstromregelungselementen.

Weitere Vorteile und vorteilhafte Ausführungsformen werden in den Unteransprüchen, der Beschreibung und den Zeichnungen definiert.

Im Folgenden wird die Erfindung anhand von in den Zeichnungen dargestellten Ausführungsbeispielen näher beschrieben. Dabei sind die Ausführungsbeispiele rein exemplarischer Natur und legen nicht den Schutzbereich der Anmeldung fest. Dieser wird allein durch die anhängigen Ansprüche definiert. Die nachfolgend anhand von Ausführungsbeispielen beschriebenen Merkmale können auch in anderen als den explizit genannten Kombinationen im Rahmen der Erfindung Verwendung finden.

Es zeigen:

Figur 1     ein schematisches Blockdiagramm eines ersten bevorzugten Ausführungsbeispiels des erfindungsgemäßen Systems; und

Figur 2    ein schematisches Blockdiagramm eines zweiten bevorzugten Ausführungsbeispiels des erfindungsgemäßen Systems.

Im Folgenden werden gleiche oder gleichwirkende Elemente mit den gleichen Bezugszeichen gekennzeichnet.

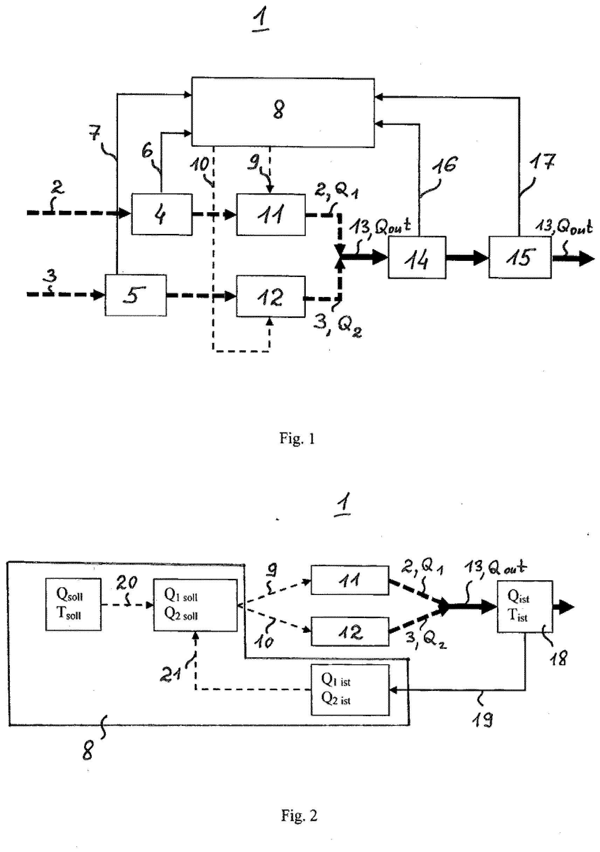

Figur 1 zeigt in einer schematischen Blockdarstellung ein erstes bevorzugtes Ausführungsbeispiel für ein System 1, das dazu ausgelegt ist, das erfindungsgemäße Regelverfahren auszuführen. Das System 1 weist Eingangsleitungen 2 und 3 auf, mittels derer zwei Eingangsfluide $F_1$, $F_2$ mit verschiedenen Temperaturen $T_1$ und $T_2$ und einstellbaren Teilvolumenströmen $Q_1$, $Q_2$ bereitgestellt werden.

Weiterhin zeigt Fig. 1, dass die Temperatur $T_1$ des ersten Eingangsfluids $F_1$ mittels eines Temperatursensors 4 in der Eingangsleitung 2 und die Temperatur $T_2$ des zweiten Eingangsfluids $F_2$ mittels eines weiteren Temperatursensors 5 in der Eingangsleitung 3 erfasst werden. Die erfassten Temperaturwerte $T_1$ und $T_2$ werden über Messsignalleitungen 6 und 7 an eine Steuereinheit 8 übergeben.

Weiterhin sind Regelventile 11 und 12 vorgesehen, mittels derer die Teilvolumenströme $Q_1$, $Q_2$ in den Eingangsleitungen 2 und 3 einstellbar sind.

Stromabwärts der Regelventile 11 und 12 münden die Eingangsleitungen 2 und 3 in eine Ausgangsleitung 13 für einen Ausgangsfluidstrom $Q_{out}$. Somit ergibt sich der Volumenstrom des ausgehenden Fluidstroms $Q_{out}$ aus der Summe der Teilvolumenströme $Q_1$ und $Q_2$ der Eingangsfluide stromabwärts der Regelventile 11 und 12.

Weiterhin ist in der Ausgangsleitung 13 ein Volumenstromsensor 14 und ein Temperatursensor 15 vorgesehen, mittels derer ein Ist-Volumenstrom $Q_{ist}$ und eine Ist-Temperatur $T_{ist}$ des Ausgangsfluidstroms $Q_{out}$ erfasst werden. Diese Istwerte $Q_{ist}$, $T_{ist}$ werden ebenfalls über weitere Messsignalleitungen 16 und 17 an die Steuereinheit 8 übergeben.

Die Steuereinheit 8 selbst ist dazu ausgelegt, den ausgehenden Fluidstrom $Q_{out}$ auf einen vorbestimmten Soll-Volumenstrom $Q_{soll}$ und eine vorbestimmte Soll-Temperatur $T_{soll}$ zu regeln.

Hierzu werden in der Steuereinheit 8 aus den Sollwerten $Q_{soll}$ und $T_{soll}$ des Fluidstroms $Q_{out}$ und den erfassten Temperaturen $T_1$ und $T_2$ der Eingangsfluide die benötigten Soll-Teilvolumenströme $Q_{1\,soll}$ bzw. $Q_{2\,soll}$ der Eingangsfluide $F_1$ und $F_2$ anhand folgender Formeln berechnet.

$$Q_{1\,soll} = Q_{soll} * (T_{soll} - T_2) / (T_1 - T_2), \qquad Q_{2\,soll} = Q_{soll} * (1 - (T_{soll} - T_2) / (T_1 - T_2))$$

Mittels dieser berechneten Teilvolumenströme $Q_{1\,soll}$ bzw. $Q_{2\,soll}$ steuert die Steuereinheit 8 über Ansteuerungsleitungen 9 und 10 die Regelventile 11 und 12 an, die diese Sollwerte in Teilvolumenströme $Q_1$ bzw. $Q_2$ der Eingangsfluide $F_1$ und $F_2$ in den Eingangsleitungen 2 und 3 umsetzen.

Weiterhin berechnet die Steuereinheit 8 anhand des erfassten Ist-Volumenstroms $Q_{ist}$ und der erfassten Ist-Temperatur $T_{ist}$ des ausgehenden Fluidstroms $Q_{out}$ sowie anhand der erfassten Temperaturen $T_1$ und $T_2$ der Eingangsfluide $F_1$ und $F_2$ tatsächlich geflossene Ist-Teilvolumenströme $Q_{1\,ist}$ bzw. $Q_{2\,ist}$ der Eingangsfluide $F_1$ und $F_2$ mittels der Formel:

$$Q_{1\,ist} = Q_{ist} * (T_{ist} - T_2) / (T_1 - T_2), \qquad Q_{2\,ist} = Q_{ist} * (1 - (T_{ist} - T_2) / (T_1 - T_2))$$

Diese berechneten Istwerte $Q_{1\,ist}$, $Q_{2\,ist}$ werden wiederum von der Steuereinheit 8 zur Regelung der Teilvolumenströme $Q_1$ und $Q_2$ auf die Soll-Teilvolumenströme $Q_{1\,soll}$ bzw. $Q_{2\,soll}$ verwendet.

In Figur 2 ist schematisch ein zweites bevorzugtes Ausführungsbeispiel des erfindungsgemäßen Systems 1 dargestellt, bei dem im Unterschied zu Fig. 1 die Temperaturen $T_1$ und $T_2$ der beiden Eingangsfluide vorbekannt sind und eine kombinierte Messeinheit 18 zur erfindungsgemäßen Erfassung des Ist-Volumenstroms $Q_{ist}$ und der Ist-Temperatur $T_{ist}$ des ausgehenden Fluidstroms $Q_{out}$ vorgesehen ist. Diese Istwerte werden der Steuereinheit 8 über eine Messsignalleitung 19 übergeben.

Zur Verdeutlichung des Verfahrens zeigt Fig. 2 die erfindungsgemäßen Schritte, die von der Steuereinheit 8 ausgeführt werden als Untereinheiten. So berechnet, die Steuereinheit 8 die einzustellenden Soll-Teilvolumenströme $Q_{1\,soll}$ und $Q_{2\,soll}$ der Eingangsfluide anhand des Soll-Volumenstroms $Q_{soll}$ und der Soll-Temperatur $T_{soll}$ des Fluidstroms $Q_{out}$, sowie die Ist-Teilvolumenströmen $Q_{1\,ist}$ und $Q_{2\,ist}$ anhand des Ist-Volumenstroms $Q_{ist}$ und der Ist-Temperatur $T_{ist}$ des Fluidstroms $Q_{out}$. Dabei sind interne Signalleitungen 20 und 21 in der Steuereinheit 8 schematisch angedeutet, die die obigen erfassten bzw. von außen eingegebenen Parameter für die Berechnung der Soll- und Ist-Teilvolumenströme $Q_{1\,soll}$ und $Q_{2\,soll}$ bzw. $Q_{1\,ist}$ und $Q_{2\,ist}$ übermitteln.

Im Unterschied zu bekannten Systemen, bei denen die einzelnen Teilvolumenströme der Eingangsfluide gemessen und jeweils direkt in einem eigenen Regelkreis verwendet werden, werden vorliegend aus der Messung des Volumenstroms des Ausgangsfluidstroms und den Temperaturen bzw. Viskositätswerten der Eingangsfluide alle für die Regelung des Ausgangsfluidstroms benötigten Regelgrößen abgeleitet. Die Teilvolumenströme der Eingangsfluide können somit in einem gemeinsamen Regelkreis geregelt werden. Zudem kommt das erfindungsgemäße Verfahren grundsätzlich mit einer Volumenstrommessung für einen Ausgangsfluidstrom aus, was eine wesentliche bauliche Vereinfachung gegenüber bisher bekannten Systemen darstellt.

**Bezugszeichenliste**

1     erfindungsgemäßes System
2     Eingangsleitung
3     Eingangsleitung
4     Temperatursensor
5     Temperatursensor
6     Messsignalleitung
7     Messsignalleitung
8     Steuereinheit
9     Ansteuerungsleitung
10    Ansteuerungsleitung
11    Regelventil
12    Regelventil
13    Ausgangsleitung
14    Volumenstromsensor
15    Temperatursensor
16    Messsignalleitung
17    Messsignalleitung
18    Messeinheit
19    Messsignalleitung

**Patentansprüche**

1. Verfahren zum Ausgeben eines Ausgangsfluidstroms ($F_{out}$), insbesondere eines Schmiermittels, insbesondere eines Schmieröls, mit einem vorbestimmten Soll-Volumenstrom ($Q_{out;soll}$) und einer vorbestimmten Soll-Temperatur ($T_{out;soll}$), der sich aus mindestens zwei Eingangsfluiden ($F_1$, $F_2$), jeweils mit einem einstellbaren Teilvolumenstrom ($Q_1$) bzw. ($Q_2$) und einer bestimmbaren Temperatur ($T_1$) bzw. ($T_2$), zusammensetzt, umfassend die Schritte:

     - Erfassen eines Ist-Volumenstroms ($Q_{out;ist}$) und einer Ist-Temperatur ($T_{out;ist}$) des Ausgangsfluidstroms ($F_{out}$),
     - Berechnen einzustellender Soll-Teilvolumenströme ($Q_{1\,soll}$, $Q_{2\,soll}$) anhand des Soll-Volumenstroms ($Q_{out;soll}$) und der Soll-Temperatur ($T_{out;\,soll}$) des Ausgangsfluidstroms ($F_{out}$) und anhand der Temperaturen ($T_1$, $T_2$) der Eingangsfluide ($F_1$, $F_2$),
     - Berechnen von Ist-Teilvolumenströmen ($Q_{1\,ist}$, $Q_{2\,ist}$) anhand des Ist-Volumenstroms ($Q_{out;ist}$) und der Ist-Temperatur ($T_{out;ist}$) des Ausgangsfluidstroms ($F_{out}$) und anhand der Temperaturen ($T_1$, $T_2$) der Eingangsfluide ($F_1$, $F_2$), und
     - Regeln der Teilvolumenströme ($Q_1$, $Q_2$) auf die Soll-Teilvolumenströme ($Q_{1\,soll}$, $Q_{2\,soll}$) mittels der berechneten Ist-Teilvolumenströme ($Q_{1\,ist}$, $Q_{2\,ist}$), wobei das Regeln von mindestens einem der Teilvolumenströme ($Q_1$, $Q_2$) auf den jeweiligen Soll-Teilvolumenstrom ($Q_{1\,soll}$, $Q_{2\,soll}$) automatisiert erfolgt, indem ein geschlossener elektronischer Regelkreis implementiert ist, und wobei der jeweilige Ist-Teilvolumenstrom ($Q_{1\,ist}$, $Q_{2\,ist}$) zu einer negativen Rückkopplung verwendet wird.

2. Verfahren nach Anspruch 1, wobei eine Ist-Viskosität ($\eta_{ist}$) des Ausgangsfluidstroms ($F_{out}$) mittels eines Viskosimeters gemessen wird und aus der gemessenen Ist-Viskosität ($\eta_{ist}$) die Ist-Temperatur ($T_{out;ist}$) des Ausgangsfluidstroms ($F_{out}$) bestimmt wird.

3. Verfahren zum Ausgeben eines Ausgangsfluidstroms ($F_{out}$), insbesondere eines Schmiermittels, insbesondere eines Schmieröls, mit einem vorbestimmten Soll-Volumenstrom ($Q_{out;soll}$) und einer vorbestimmten Soll-Viskosität ($\eta_{soll}$), der sich aus mindestens zwei Eingangsfluiden ($F_1$, $F_2$), jeweils mit einem einstellbaren Teilvolumenstrom ($Q_1$) bzw. ($Q_2$) und einer bestimmbaren Temperatur ($T_1$) bzw. ($T_2$), zusammensetzt, umfassend die Schritte:

- Erfassen eines Ist-Volumenstroms ($Q_{out;ist}$) und einer Ist-Viskosität ($\eta_{ist}$) des Ausgangsfluidstroms ($F_{out}$),
- Berechnen einzustellender Soll-Teilvolumenströme ($Q_{1;soll}$, $Q_{2;soll}$) anhand des Soll-Volumenstroms ($Q_{out;soll}$) und der Soll-Viskosität ($\eta_{out;soll}$) des Ausgangsfluidstroms ($F_{out}$) und anhand der Temperaturen ($T_1$, $T_2$) der Eingangsfluide ($F_1$, $F_2$),
- Berechnen von Ist-Teilvolumenströmen ($Q_{1,ist}$, $Q_{2;ist}$) anhand des Ist-Volumenstroms ($Q_{out;ist}$) und der Ist-Viskosität ($\eta_{out;ist}$) des Ausgangsfluidstroms ($F_{out}$) und anhand der Temperaturen ($T_1$, $T_2$) der Eingangsfluide ($F_1$, $F_2$), und
- Regeln der Teilvolumenströme ($Q_1$, $Q_2$) auf die Soll-Teilvolumenströme ($Q_{1\,soll}$, $Q_{2\,soll}$) mittels der berechneten Ist-Teilvolumenströme ($Q_{1\,ist}$, $Q_{2\,ist}$), wobei das Regeln von mindestens einem der Teilvolumenströme ($Q_1$, $Q_2$) auf den jeweiligen Soll-Teilvolumenstrom ($Q_{1\,soll}$, $Q_{2\,soll}$) automatisiert erfolgt, indem ein geschlossener elektronischer Regelkreis implementiert ist, und wobei der jeweilige Ist-Teilvolumenstrom ($Q_{1\,ist}$, $Q_{2\,ist}$) zu einer negativen Rückkopplung verwendet wird.

4. Verfahren nach Anspruch 3, wobei eine Ist-Temperatur ($T_{out;ist}$) des Ausgangsfluidstroms ($F_{out}$) gemessen wird und die Ist-Viskosität ($\eta_{ist}$) des Ausgangsfluidstroms ($F_{out}$) aus der Ist-Temperatur ($T_{out;ist}$) des Ausgangsfluidstroms ($F_{out}$) bestimmt wird.

5. Verfahren nach Anspruch 1 oder 4, bei dem die Ist-Temperatur ($T_{out;ist}$) des Ausgangsfluidstroms ($F_{out}$) mittels einer Temperaturmessung (15, 18) am Ausgangsfluidstrom ($F_{out}$) erfasst wird.

6. Verfahren nach einem der vorhergehenden Ansprüche, bei dem die Temperatur ($T_1$, $T_2$) mindestens eines der Eingangsfluide ($F_1$, $F_2$) mittels einer Temperaturmessung (4, 5) am jeweiligen Eingangsfluid ($F_1$, $F_2$) erfasst wird.

7. Verfahren nach einem der vorhergehenden Ansprüche, bei dem der Teilvolumenstrom ($Q_1$, $Q_2$) mindestens eines der Eingangsfluide ($F_1$, $F_2$) kontinuierlich einstellbar ist.

8. Verfahren nach einem der vorhergehenden Ansprüche, bei dem das Regeln von allen Teilvolumenströmen ($Q_1$, $Q_2$) auf den jeweiligen Soll-Teilvolumenstrom ($Q_{1\,soll}$, $Q_{2\,soll}$) automatisiert erfolgt.

9. Verfahren nach Anspruch 1 oder 2, oder einem der Ansprüche 5 bis 8, falls von Anspruch 1 abhängig, bei dem der Ausgangsfluidstrom ($F_{out}$) zwei Eingangsfluide ($F_1$, $F_2$) mit im Wesentlichen verschiedenen Temperaturen ($T_1 \neq T_2$) umfasst und das Berechnen der Ist- und Soll-Teilvolumenströme ($Q_{1\,ist}$, $Q_{2\,ist}$) bzw. ($Q_{1\,soll}$, $Q_{2\,soll}$) mittels der Formeln

$$Q_{1\,soll} = Q_{out;soll} * (T_{out;soll} - T_2) / (T_1 - T_2), \qquad Q_{2\,soll} = Q_{out;soll} * (1 - (T_{out;soll} - T_2) / (T_1 - T_2))$$

bzw.

$$Q_{1\,ist} = Q_{out;ist} * (T_{out;ist} - T_2) / (T_1 - T_2), \qquad Q_{2\,ist} = Q_{out;ist} * (1 - (T_{out;ist} - T_2) / (T_1 - T_2))$$

erfolgt.

10. Verfahren nach Anspruch 3 oder 4 oder einem der Ansprüche 5 bis 8, falls von Anspruch 3 abhängig, bei dem sich der Ausgangsfluidstrom ($F_{out}$) aus mindestens zwei Eingangsfluiden ($F_1$, $F_2$) mit im Wesentlichen derselben Temperatur ($T_1 = T_2$) und im Wesentlichen verschiedenen Viskositätswerten ($\eta_1 \neq \eta_2$) zusammensetzt.

11. Verfahren zum Ausgeben eines Ausgangsfluidstroms ($F_{out}$), insbesondere eines Schmiermittels, insbesondere eines Schmieröls,, mit einem vorbestimmten Soll-Volumenstrom ($Q_{our;soll}$) und einer vorbestimmten Soll-Viskosität ($\eta_{out;soll}$), der sich aus mindestens zwei Eingangsfluiden ($F_1$, $F_2$) mit im Wesentlichen derselben Temperatur ($T_1 = T_2$), im Wesentlichen verschiedenen Viskositätswerten ($\eta_1 \neq \eta_2$) und jeweils mit einem einstellbaren Teilvolumenstrom ($Q_1$) bzw. ($Q_2$) zusammensetzt, umfassend die Schritte:

- Erfassen eines Ist-Volumenstroms ($Q_{out;ist}$) und einer Ist-Viskosität ($\eta_{out;ist}$) des Ausgangsfluidstroms ($F_{out}$),

- Berechnen einzustellender Soll-Teilvolumenströme ($Q_{1\,soll}$, $Q_{2\,soll}$) anhand des Soll-Volumenstroms ($Q_{out;\,soll}$) und der Soll-Viskosität ($\eta_{out;soll}$) des Ausgangsfluidstroms ($F_{out}$) und anhand der Viskositätswerte ($\eta_1$, $\eta_2$) der Eingangsfluide ($F_1$, $F_2$),
- Berechnen von Ist-Teilvolumenströmen ($Q_{1\,ist}$, $Q_{2\,ist}$) anhand des Ist-Volumenstroms ($Q_{out;\,ist}$) und der Ist-Viskosität ($\eta_{out;ist}$) des Ausgangsfluidstroms ($Q_{out}$) und anhand der Viskositätswerte ($\eta_1$, $\eta_2$) der Eingangsfluide ($F_1$, $F_2$), und
- Regeln der Teilvolumenströme ($Q_1$, $Q_2$) auf die Soll-Teilvolumenströme ($Q_{1\,soll}$, $Q_{2\,soll}$) mittels der berechneten Ist-Teilvolumenströme ($Q_{1\,ist}$, $Q_{2\,ist}$), wobei das Regeln von mindestens einem der Teilvolumenströme ($Q_1$, $Q_2$) auf den jeweiligen Soll-Teilvolumenstrom ($Q_{1\,soll}$, $Q_{2\,soll}$) automatisiert erfolgt, indem ein geschlossener elektronischer Regelkreis implementiert ist, und wobei der jeweilige Ist-Teilvolumenstrom ($Q_{1\,ist}$, $Q_{2\,ist}$) zu einer negativen Rückkopplung verwendet wird.

**12.** System zum Ausführen des Verfahrens nach Anspruch 1 oder 2, oder einem der Ansprüche 5 bis 9, falls von Anspruch 1 abhängig, zum Ausgeben eines Ausgangfluidstroms ($F_{out}$), insbesondere eines Schmiermittels, insbesondere eines Schmieröls, mit einem vorbestimmten Soll-Volumenstrom ($Q_{out;soll}$) und einer vorbestimmten Soll-Temperatur ($T_{out;soll}$), mit

- mindestens zwei Eingangsleitungen (2, 3) für mindestens zwei Eingangsfluide ($F_1$, $F_2$), jeweils einem einstellbaren Teilvolumenstrom ($Q_1$) bzw. ($Q_2$) und mit einer bestimmbaren Temperatur ($T_1$) bzw. ($T_2$),
- mindestens einem Volumenstromregelelement (11, 12), mittels dessen die Teilvolumenströme ($Q_1$, $Q_2$) in den Eingangsleitungen (2, 3) einstellbar sind,
- einer Ausgangsleitung (13) für den Ausgangsfluidstrom ($F_{out}$), in die die Eingangsleitungen (2, 3) stromabwärts von dem mindestens einen Volumenstromregelelement (11, 12) münden,
- einem Volumenstromsensor (14, 18) zum Erfassen des Ist-Volumenstroms ($Q_{out;ist}$) des Ausgangsfluidstroms ($F_{out}$) und
- einer Steuereinheit (8), die dazu ausgelegt ist, das mindestens eine Volumenstromregelelement (11, 12) anzusteuern und das Verfahren auszuführen.

**13.** System zum Ausführen des Verfahrens nach Anspruch 3 oder 4, oder einem der Ansprüche 5, 6, 7, 8, 10, falls von Anspruch 3 abhängig zum Ausgeben eines Ausgangfluidstroms ($Q_{out}$), insbesondere eines Schmiermittels, insbesondere eines Schmieröls, mit einem vorbestimmten Soll-Volumenstrom ($Q_{out;soll}$) und einer vorbestimmten Soll-Viskosität ($\eta_{out;soll}$), mit

- mindestens zwei Eingangsleitungen (2, 3) für mindestens zwei Eingangsfluide ($F_1$, $F_2$), jeweils einem einstellbaren Teilvolumenstrom ($Q_1$) bzw. ($Q_2$) und mit einer bestimmbaren Viskosität ($\eta_1$) bzw. ($\eta_2$),
- mindestens einem Volumenstromregelelement (11, 12), mittels dessen die Teilvolumenströme ($Q_1$, $Q_2$) in den Eingangsleitungen (2, 3) einstellbar sind,
- einer Ausgangsleitung (13) für den Ausgangsfluidstrom ($F_{out}$), in die die Eingangsleitungen (2, 3) stromabwärts von dem mindestens einen Volumenstromregelelement (11, 12) münden,
- einem Volumenstromsensor (14, 18) zum Erfassen des Ist-Volumenstroms ($Q_{out;ist}$) des Ausgangsfluidstroms ($F_{out}$) und
- einer Steuereinheit (8), die dazu ausgelegt ist, das mindestens eine Volumenstromregelelement (11, 12) anzusteuern und das Verfahren auszuführen.

## Claims

**1.** Method for the outputting of an output fluid flow ($F_{out}$), in particular of a lubricant, in particular of a lubricating oil, with a predetermined setpoint volumetric flow rate ($Q_{out;setpoint}$) and a predetermined setpoint temperature ($T_{out;setpoint}$), said output fluid flow being composed of at least two input fluids ($F_1$, $F_2$), each with an adjustable partial volumetric flow rate ($Q_1$) and ($Q_2$), respectively, and a determinable temperature ($T_2$) and ($T_2$), respectively, comprising the following steps:

- detecting an actual volumetric flow rate ($Q_{out;actual}$) and an actual temperature ($T_{out;actual}$) of the output fluid flow ($F_{out}$),
- calculating setpoint partial volumetric flow rates ($Q_{1\,setpoint}$, $Q_{2\,setpoint}$) to be adjusted on the basis of the setpoint volumetric flow rate ($Q_{out;setpoint}$) and the setpoint temperature ($T_{out;setpoint}$) of the output fluid flow ($F_{out}$) and on the basis of the temperatures ( $T_1$, $T_2$) of the input fluids ($F_1$, $F_2$),

- calculating actual partial volumetric flow rates ($Q_{1\ actual}$, $Q_{2\ actual}$) on the basis of the actual volumetric flow rate ($Q_{out;actual}$) and the actual temperature ($T_{out;actual}$) of the output fluid flow ($F_{out}$) and on the basis of the temperatures ($T_1$, $T_2$) of the input fluids ($F_2$, $F_2$), and

- closed-loop controlling of the partial volumetric flow rates ($Q_1$, $Q_2$) to the setpoint partial volumetric flow rates ($Q_{1\ setpoint}$, $Q_{2\ setpoint}$) by means of the calculated actual partial volumetric flow rates ($Q_{1\ actual}$, $Q_{2\ actual}$), wherein the closed-loop controlling of at least one of the partial volumetric flow rates ($Q_1$, $Q_2$) to the respective setpoint partial volumetric flow rate ($Q_{1\ setpoint}$, $Q_{2\ setpoint}$) is effected in an automated manner by a closed electronic control loop being implemented, and wherein the respective actual partial volumetric flow rate ($Q_{1\ actual}$, $Q_{2\ actual}$) is used for a negative feedback.

2. Method according to Claim 1, wherein an actual viscosity ($\eta_{actual}$) of the output fluid flow ($F_{out}$) is measured by means of a viscometer and the actual temperature ($T_{out;actual}$) of the output fluid flow ($F_{out}$) is determined from the measured actual viscosity ($\eta_{actual}$).

3. Method for the outputting of an output fluid flow ($F_{out}$), in particular of a lubricant, in particular of a lubricating oil, with a predetermined setpoint volumetric flow rate ($Q_{out;setpoint}$) and a predetermined setpoint viscosity ($\eta_{setpoint}$), said output fluid flow being composed of at least two input fluids ($F_2$, $F_2$), each with an adjustable partial volumetric flow rate ($Q_1$) and ($Q_2$), respectively, and a determinable temperature ($T_2$) and ($T_2$), respectively, comprising the following steps:

- detecting an actual volumetric flow rate ($Q_{out;actual}$) and an actual viscosity ($\eta_{actual}$) of the output fluid flow ($F_{out}$),
- calculating setpoint partial volumetric flow rates ($Q_{1;setpoint}$, $Q_{2;\ setpoint}$) to be adjusted on the basis of the setpoint volumetric flow rate ($Q_{out;setpoint}$) and the setpoint viscosity ($\eta_{out;\ setpoint}$) of the output fluid flow ($F_{out}$) and on the basis of the temperatures ($T_1$, $T_2$) of the input fluids ($F_1$, $F_2$),
- calculating actual partial volumetric flow rates ($Q_{1;\ actual}$, $Q_{2;\ actual}$) on the basis of the actual volumetric flow rate ($Q_{out;actual}$) and the actual viscosity ($\eta_{out;actual}$) of the output fluid flow ($F_{out}$) and on the basis of the temperatures ($T_1$, $T_2$) of the input fluids ($F_1$, $F_2$), and
- closed-loop controlling of the partial volumetric flow rates ($Q_1$, $Q_2$) to the setpoint partial volumetric flow rates ($Q_{1\ setpoint}$, $Q_{2\ setpoint}$) by means of the calculated actual partial volumetric flow rates ($Q_{2\ actual}$, $Q_{2\ actual}$), wherein the closed-loop controlling of at least one of the partial volumetric flow rates ($Q_1$, $Q_2$) to the respective setpoint partial volumetric flow rate ($Q_{1\ setpoint}$, $Q_{2\ setpoint}$) is effected in an automated manner by a closed electronic control loop being implemented, and wherein the respective actual partial volumetric flow rate ($Q_{1\ actual}$, $Q_{2\ actual}$) is used for a negative feedback.

4. Method according to Claim 3, wherein an actual temperature ($T_{out;actual}$) of the output fluid flow ($F_{out}$) is measured and the actual viscosity ($\eta_{actual}$) of the output fluid flow ($F_{out}$) is determined from the actual temperature ($T_{out;actual}$) of the output fluid flow ($F_{out}$).

5. Method according to Claim 1 or 4, wherein the actual temperature ($T_{out;actual}$) of the output fluid flow ($F_{out}$) is detected by means of a temperature measurement (15, 18) on the output fluid flow ($F_{out}$).

6. Method according to any of the preceding claims, wherein the temperature ($T_1$, $T_2$) of at least one of the input fluids ($F_1$, $F_2$) is detected by means of a temperature measurement (4, 5) on the respective input fluid ($F_1$, $F_2$) .

7. Method according to any of the preceding claims, wherein the partial volumetric flow rate ($Q_1$, $Q_2$) of at least one of the input fluids ($F_1$, $F_2$) is continuously adjustable.

8. Method according to any of the preceding claims, wherein the closed-loop controlling of all partial volumetric flow rates ($Q_1$, $Q_2$) to the respective setpoint partial volumetric flow rate ($Q_{1\ setpoint}$, $Q_{2\ setpoint}$) is effected in an automated manner.

9. Method according to Claim 1 or 2, or any of Claims 5 to 8, if dependent on Claim 1, wherein the output fluid flow ($F_{out}$) comprises two input fluids ($F_1$, $F_2$) with substantially different temperatures ($T_1 \neq T_2$) and calculating the actual and setpoint partial volumetric flow rates ($Q_{1\ actual}$, $Q_{2\ actual}$) and ($Q_{1\ setpoint}$, $Q_{2\ setpoint}$), respectively, is effected by means of the formulae

$$Q_{1 \text{ setpoint}} = Q_{\text{out;setpoint}} * (T_{\text{out;setpoint}} - T_2)/(T_1 - T_2),$$

$$Q_{2 \text{ setpoint}} = Q_{\text{out;setpoint}} * (1-(T_{\text{out;setpoint}} - T_2)/(T_1 - T_2))$$

and

$$Q_{1 \text{ actual}} = Q_{\text{out;actual}} * (T_{\text{out;actual}} - T_2)/(T_1 - T_2),$$

$$Q_{2 \text{ actual}} = Q_{\text{out;actual}} * (1-(T_{\text{out;actual}} - T_2)/(T_1 - T_2)).$$

10. Method according to Claim 3 or 4 or any of Claims 5 to 8, if dependent on Claim 3, wherein the output fluid flow ($F_{\text{out}}$) is composed of at least two input fluids ($F_1$, $F_2$) with substantially the same temperature ($T_1=T_2$) and substantially different viscosity values ($\eta_1 \neq \eta_2$).

11. Method for the outputting of an output fluid flow ($F_{\text{out}}$), in particular of a lubricant, in particular of a lubricating oil, with a predetermined setpoint volumetric flow rate ($Q_{\text{out;setpoint}}$) and a predetermined setpoint viscosity ($\eta_{\text{out;setpoint}}$), said output fluid flow being composed of at least two input fluids ($F_1$, $F_2$) with substantially the same temperature ($T_1=T_2$), substantially different viscosity values ($\eta_1 \neq \eta_2$), and each with an adjustable partial volumetric flow rate ($Q_1$) and ($Q_2$), respectively, comprising the following steps:

- detecting an actual volumetric flow rate ($Q_{\text{out;actual}}$) and an actual viscosity ($\eta_{\text{out;actual}}$) of the output fluid flow ($F_{\text{out}}$),
- calculating setpoint partial volumetric flow rates ($Q_{1 \text{ setpoint}}$, $Q_{2 \text{ setpoint}}$) to be adjusted on the basis of the setpoint volumetric flow rate ($Q_{\text{out;setpoint}}$) and the setpoint viscosity ($\eta_{\text{out;setpoint}}$) of the output fluid flow ($F_{\text{out}}$) and on the basis of the viscosity values ($\eta_1$, $\eta_2$) of the input fluids ($F_1$, $F_2$),
- calculating actual partial volumetric flow rates ($Q_{1 \text{ actual}}$, $Q_{2 \text{ actual}}$) on the basis of the actual volumetric flow rate ($Q_{\text{out;actual}}$) and the actual viscosity ($\eta_{\text{out;actual}}$) of the output fluid flow ($Q_{\text{out}}$) and on the basis of the viscosity values ($\eta_1$, $\eta_2$) of the input fluids ($F_1$, $F_2$), and
- closed-loop controlling of the partial volumetric flow rates ($Q_1$, $Q_2$) to the setpoint partial volumetric flow rates ($Q_{1 \text{ setpoint}}$, $Q_{2 \text{ setpoint}}$) by means of the calculated actual partial volumetric flow rates ($Q_{1 \text{ actual}}$, $Q_{2 \text{ actual}}$), wherein the closed-loop controlling of at least one of the partial volumetric flow rates ($Q_1$, $Q_2$) to the respective setpoint partial volumetric flow rate ($Q_{1 \text{ setpoint}}$, $Q_{2 \text{ setpoint}}$) is effected in an automated manner by a closed electronic control loop being implemented, and wherein the respective actual partial volumetric flow rate ($Q_{1 \text{ actual}}$, $Q_{2 \text{ actual}}$) is used for a negative feedback.

12. System for carrying out the method according to Claim 1 or 2, or any of Claims 5 to 9, if dependent on Claim 1, for the outputting of an output fluid flow ($F_{\text{out}}$), in particular of a lubricant, in particular of a lubricating oil, with a predetermined setpoint volumetric flow rate ($Q_{\text{out;setpoint}}$) and a predetermined setpoint temperature ($T_{\text{out;setpoint}}$), comprising

- at least two input lines (2, 3) for at least two input fluids ($F_1$, $F_2$), each with an adjustable partial volumetric flow rate ($Q_1$) and ($Q_2$), respectively, and with a determinable temperature ($T_1$) and ($T_2$), respectively,
- at least one volumetric flow rate control element (11, 12), by means of which the partial volumetric flow rates ($Q_1$, $Q_2$) in the input lines (2, 3) are adjustable,
- an output line (13) for the output fluid flow ($F_{\text{out}}$), the input lines (2, 3) leading into said output line downstream of the at least one volumetric flow rate control element (11, 12),
- a volumetric flow rate sensor (14, 18) for detecting the actual volumetric flow rate ($Q_{\text{out;actual}}$) of the output fluid flow ($F_{\text{out}}$), and
- a control unit (8) designed to control the at least one volumetric flow rate control element (11, 12) and to carry out the method.

13. System for carrying out the method according to Claim 3 or 4, or any of Claims 5, 6, 7, 8, 10, if dependent on Claim 3, for the outputting of an output fluid flow ($Q_{\text{out}}$), in particular of a lubricant, in particular of a lubricating oil, with a predetermined setpoint volumetric flow rate ($Q_{\text{out;setpoint}}$) and a predetermined setpoint viscosity ($\eta_{\text{out;setpoint}}$), comprising

- at least two input lines (2, 3) for at least two input fluids ($F_1$, $F_2$), each with an adjustable partial volumetric flow rate ($Q_1$) and ($Q_2$), respectively, and with a determinable viscosity ($\eta_1$) and ($\eta_2$), respectively,

- at least one volumetric flow rate control element (11, 12), by means of which the partial volumetric flow rates ($Q_1$, $Q_2$) in the input lines (2, 3) are adjustable,
- an output line (13) for the output fluid flow ($F_{out}$), the input lines (2, 3) leading into said output line downstream of the at least one volumetric flow rate control element (11, 12),
- a volumetric flow rate sensor (14, 18) for detecting the actual volumetric flow rate ($Q_{out;actual}$) of the output fluid flow ($F_{out}$), and
- a control unit (8) designed to control the at least one volumetric flow rate control element (11, 12) and to carry out the method.

**Revendications**

1. Procédé pour délivrer un courant de fluide de sortie ($F_{out}$), notamment d'un agent lubrifiant, notamment d'une huile de lubrification, avec un débit volumique de consigne ($Q_{out;soll}$) prédéterminé et une température de consigne ($T_{out;soll}$) prédéterminée, lequel se compose d'au moins deux fluides d'entrée ($F_1$, $F_2$), respectivement avec un débit volumique partiel ($Q_1$) ou ($Q_2$) réglable et une température ($T_1$) ou ($T_1$) pouvant être prédéterminée, comprenant les étapes suivantes :

   - acquisition d'un débit volumique réel ($Q_{out;ist}$) et d'une température réelle ($T_{out;ist}$) du courant de fluide de sortie ($F_{out}$),
   - calcul de débits volumiques partiels de consigne ($Q_{1\ soll}$, $Q_{2\ soll}$) à régler à l'aide du débit volumique de consigne ($Q_{out;soll}$) et de la température de consigne ($T_{out;soll}$) du courant de fluide de sortie ($F_{out}$) et à l'aide des températures ($T_1$, $T_2$) des fluides d'entrée ($F_1$, $F_2$),
   - calcul de débits volumiques partiels réels ($Q_{1\ ist}$, $Q_{2\ ist}$) à l'aide du débit volumique réel ($Q_{out;ist}$) et de la température réelle ($T_{out;ist}$) du courant de fluide de sortie ($F_{out}$) et à l'aide des températures ($T_1$, $T_2$) des fluides d'entrée ($F_1$, $F_2$), et
   - régulation des débits volumiques partiels ($Q_1$, $Q_2$) aux débits volumiques partiels de consigne ($Q_{1\ soll}$, $Q_{2\ soll}$) au moyen des débits volumiques partiels réels ($Q_{1\ ist}$, $Q_{2\ ist}$) calculés, la régulation d'au moins l'un des débits volumiques partiels ($Q_1$, $Q_2$) au débit volumique partiel de consigne ($Q_{1\ soll}$, $Q_{2\ soll}$) respectif s'effectuant de manière automatisée en mettant en œuvre une boucle de régulation électronique fermée, et le débit volumique partiel réel ($Q_{1\ ist}$, $Q_{2\ ist}$) respectif étant utilisé pour une contre-réaction négative.

2. Procédé selon la revendication 1, une viscosité réelle ($\eta_{ist}$) du courant de fluide de sortie ($F_{out}$) étant mesurée au moyen d'un viscosimètre et la température réelle ($T_{out;ist}$) du courant de fluide de sortie ($F_{out}$) étant déterminée à partir de la viscosité réelle ($\eta_{ist}$) mesurée.

3. Procédé pour délivrer un courant de fluide de sortie ($F_{out}$), notamment d'un agent lubrifiant, notamment d'une huile de lubrification, avec un débit volumique de consigne ($Q_{out;soll}$) prédéterminé et une viscosité de consigne ($\eta_{soll}$) prédéterminée, lequel se compose d'au moins deux fluides d'entrée ($F_1$, $F_2$), respectivement avec un débit volumique partiel ($Q_1$) ou ($Q_2$) réglable et une température ($T_1$) ou ($T_1$) pouvant être prédéterminée, comprenant les étapes suivantes :

   - acquisition d'un débit volumique réel ($Q_{out;ist}$) et d'une viscosité réelle ($\eta_{ist}$) du courant de fluide de sortie ($F_{out}$),
   - calcul de débits volumiques partiels de consigne ($Q_{1\ soll}$, $Q_{2\ soll}$) à régler à l'aide du débit volumique de consigne ($Q_{out;soll}$) et de la viscosité de consigne ($\eta_{out;soll}$) du courant de fluide de sortie ($F_{out}$) et à l'aide des températures ($T_1$, $T_2$) des fluides d'entrée ($F_1$, $F_2$),
   - calcul de débits volumiques partiels réels ($Q_{1\ ist}$, $Q_{2\ ist}$) à l'aide du débit volumique réel ($Q_{out;ist}$) et de la viscosité réelle ($\eta_{out;ist}$) du courant de fluide de sortie ($F_{out}$) et à l'aide des températures ($T_1$, $T_2$) des fluides d'entrée ($F_1$, $F_2$), et
   - régulation des débits volumiques partiels ($Q_1$, $Q_2$) aux débits volumiques partiels de consigne ($Q_{1\ soll}$, $Q_{2\ soll}$) au moyen des débits volumiques partiels réels ($Q_{1\ ist}$, $Q_{2\ ist}$) calculés, la régulation d'au moins l'un des débits volumiques partiels ($Q_1$, $Q_2$) au débit volumique partiel de consigne ($Q_{1\ soll}$, $Q_{2\ soll}$) respectif s'effectuant de manière automatisée en mettant en œuvre une boucle de régulation électronique fermée, et le débit volumique partiel réel ($Q_{1\ ist}$, $Q_{2\ ist}$) respectif étant utilisé pour une contre-réaction négative.

4. Procédé selon la revendication 3, une température réelle ($T_{out;ist}$) du courant de fluide de sortie ($F_{out}$) étant mesurée et la viscosité réelle ($\eta_{ist}$) du courant de fluide de sortie ($F_{out}$) étant déterminée à partir de la température réelle ($T_{out;ist}$) du courant de fluide de sortie ($F_{out}$).

**5.** Procédé selon la revendication 1 ou 4, avec lequel la température réelle ($T_{out;ist}$) du courant de fluide de sortie ($F_{out}$) est acquise au moyen d'une mesure de température (15, 18) au niveau du courant de fluide de sortie ($F_{out}$).

**6.** Procédé selon l'une des revendications précédentes, avec lequel la température ($T_1$, $T_2$) d'au moins un fluide d'entrée ($F_1$, $F_2$) est acquise au moyen d'une mesure de température (4, 5) au niveau du fluide d'entrée ($F_1$, $F_2$) respectif.

**7.** Procédé selon l'une des revendications précédentes, avec lequel le débit volumique partiel ($Q_1$, $Q_2$) d'au moins un fluide d'entrée ($F_1$, $F_2$) est réglable continuellement.

**8.** Procédé selon l'une des revendications précédentes, avec lequel la régulation de tous les débits volumiques partiels ($Q_1$, $Q_2$) au débit volumique partiel de consigne ($Q_{1\ soll}$, $Q_{2\ soll}$) respectif s'effectue de manière automatisée.

**9.** Procédé selon la revendication 1 ou 2, ou selon l'une des revendications 5 à 8 dans le cas d'une dépendance à la revendication 1, avec lequel le courant de fluide de sortie ($F_{out}$) comporte deux fluides d'entrée ($F_1$, $F_2$) ayant des températures sensiblement différentes ($T_1 \neq T_2$) et le calcul des débits volumiques partiels réels et de consigne ($Q_{1\ ist}$, $Q_{2\ ist}$) ou ($Q_{1\ soll}$, $Q_{2\ soll}$) s'effectue au moyen des formules suivantes :

$$Q_{1\ soll} = Q_{out;soll} * (T_{out;soll} - T_2)/(T_1 - T_2),\ Q_{2\ soll} = Q_{out;soll} * (1 - (T_{out;soll} - T_2)/(T_1 - T_2))$$

ou

$$Q_{1\ ist} = Q_{out;ist} * (T_{out;ist} - T_2)/(T_1 - T_2),\ Q_{2\ ist} = Q_{out;ist} * (1 - (T_{out;ist} - T_2)/(T_1 - T_2)).$$

**10.** Procédé selon la revendication 3 ou 4, ou selon l'une des revendications 5 à 8 dans le cas d'une dépendance à la revendication 3, avec lequel le courant de fluide de sortie ($F_{out}$) se compose d'au moins deux fluides d'entrée ($F_1$, $F_2$) ayant des températures sensiblement identiques ($T_1 = T_2$) et des valeurs de viscosité sensiblement différentes ($\eta_1 \neq \eta_2$).

**11.** Procédé pour délivrer un courant de fluide de sortie ($F_{out}$), notamment d'un agent lubrifiant, notamment d'une huile de lubrification, avec un débit volumique de consigne ($Q_{out;soll}$) prédéterminé et une viscosité de consigne ($\eta_{out;soll}$) prédéterminée, lequel se compose d'au moins deux fluides d'entrée ($F_1$, $F_2$) ayant sensiblement la même température ($T_1 = T_2$) et des valeurs de viscosité sensiblement différentes ($\eta_1 \neq \eta_2$) et respectivement avec un débit volumique partiel ($Q_1$) ou ($Q_2$) réglable, comprenant les étapes suivantes :

- acquisition d'un débit volumique réel ($Q_{out;ist}$) et d'une viscosité réelle ($\eta_{out;ist}$) du courant de fluide de sortie ($F_{out}$),
- calcul de débits volumiques partiels de consigne ($Q_{1\ soll}$, $Q_{2\ soll}$) à régler à l'aide du débit volumique de consigne ($Q_{out;soll}$) et de la viscosité de consigne ($\eta_{out;soll}$) du courant de fluide de sortie ($F_{out}$) et à l'aide des valeurs de viscosité ($\eta_1$, $\eta_2$) des fluides d'entrée ($F_1$, $F_2$),
- calcul de débits volumiques partiels réels ($Q_{1\ ist}$, $Q_{2\ ist}$) à l'aide du débit volumique réel ($Q_{out;ist}$) et de la viscosité réelle ($\eta_{out;ist}$) du courant de fluide de sortie ($Q_{out}$) et à l'aide des valeurs de viscosité ($\eta_1$, $\eta_2$) des fluides d'entrée ($F_1$, $F_2$), et
- régulation des débits volumiques partiels ($Q_1$, $Q_2$) aux débits volumiques partiels de consigne ($Q_{1\ soll}$, $Q_{2\ soll}$) au moyen des débits volumiques partiels réels ($Q_{1\ ist}$, $Q_{2\ ist}$) calculés, la régulation d'au moins l'un des débits volumiques partiels ($Q_1$, $Q_2$) au débit volumique partiel de consigne ($Q_{1\ soll}$, $Q_{2\ soll}$) respectif s'effectuant de manière automatisée en mettant en œuvre une boucle de régulation électronique fermée, et le débit volumique partiel réel ($Q_{1\ ist}$, $Q_{2\ ist}$) respectif étant utilisé pour une contre-réaction négative.

**12.** Système pour mettre en œuvre le procédé selon la revendication 1 ou 2, ou selon l'une des revendications 5 à 9 dans le cas d'une dépendance à la revendication 1, pour délivrer un courant de fluide de sortie ($F_{out}$), notamment d'un agent lubrifiant, notamment d'une huile de lubrification, avec un débit volumique de consigne ($Q_{out;soll}$) prédéterminé et une température de consigne ($T_{out;soll)}$) prédéterminée, comprenant

EP 2 960 744 B1

- au moins deux conduites d'entrée (2, 3) pour au moins deux fluides d'entrée ($F_1$, $F_2$), respectivement avec un débit volumique partiel ($Q_1$) ou ($Q_2$) réglable et une température ($T_1$) ou ($T_1$) pouvant être prédéterminée,
- au moins un élément de régulation de débit volumique (11, 12) au moyen duquel peuvent être réglés les débits volumiques partiels ($Q_1$, $Q_2$) dans les conduites d'entrée (2, 3),
- une conduite de sortie (13) pour le courant de fluide de sortie ($F_{out}$), dans laquelle débouchent les conduites d'entrée (2, 3) en aval de l'au moins un élément de régulation de débit volumique (11, 12),
- un capteur de débit volumique (14, 18) destiné à acquérir le débit volumique réel ($Q_{out;ist}$) du courant de fluide de sortie ($F_{out}$) et
- une unité de commande (8), laquelle est conçue pour commander l'au moins un élément de régulation de débit volumique (11, 12) et mettre en œuvre le procédé.

**13.** Système pour mettre en œuvre le procédé selon la revendication 3 ou 4, ou selon l'une des revendications 5, 6, 7, 8, 10 dans le cas d'une dépendance à la revendication 3, pour délivrer un courant de fluide de sortie ($Q_{out}$), notamment d'un agent lubrifiant, notamment d'une huile de lubrification, avec un débit volumique de consigne ($Q_{out;soll}$) prédéterminé et une viscosité de consigne ($\eta_{out;soll}$) prédéterminée, comprenant

- au moins deux conduites d'entrée (2, 3) pour au moins deux fluides d'entrée ($F_1$, $F_2$), respectivement avec un débit volumique partiel ($Q_1$) ou ($Q_2$) réglable et une viscosité ($\eta_1$) ou ($\eta_2$) pouvant être prédéterminée,
- au moins un élément de régulation de débit volumique (11, 12) au moyen duquel peuvent être réglés les débits volumiques partiels ($Q_1$, $Q_2$) dans les conduites d'entrée (2, 3),
- une conduite de sortie (13) pour le courant de fluide de sortie ($F_{out}$), dans laquelle débouchent les conduites d'entrée (2, 3) en aval de l'au moins un élément de régulation de débit volumique (11, 12),
- un capteur de débit volumique (14, 18) destiné à acquérir le débit volumique réel ($Q_{out;ist}$) du courant de fluide de sortie ($F_{out}$) et
- une unité de commande (8), laquelle est conçue pour commander l'au moins un élément de régulation de débit volumique (11, 12) et mettre en œuvre le procédé.

13

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060231638 A1